(19) **Europäisches Patentamt**

**European Patent Office**

**Office européen des brevets**

(11) **EP 1 443 069 A1**

(12) **EUROPEAN PATENT APPLICATION**
published in accordance with Art. 158(3) EPC

(43) Date of publication:
**04.08.2004 Bulletin 2004/32**

(51) Int Cl.7: **C08J 3/22**, C08L 101/00,
C08L 23/00, C08K 3/00,
C08K 5/00
// (C08L23/00, 67:00, 25:00),
C08L23:26

(21) Application number: **02801580.8**

(22) Date of filing: **16.10.2002**

(86) International application number:
**PCT/JP2002/010751**

(87) International publication number:
**WO 2003/033572 (24.04.2003 Gazette 2003/17)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **16.10.2001 JP 2001318271**

(71) Applicants:
• **IDEMITSU PETROCHEMICAL CO., LTD.**
**Tokyo 130-0015 (JP)**
• **Tokyo Printing Ink Mfg. Co. Ltd**
**Tokyo 114-0012 (JP)**

(72) Inventors:
• **TAKIMOTO, Masami**
**Ichihara-shi, Chiba 299-0107 (JP)**
• **FUJIMOTO, Yukuo**
**Ichihara-shi, Chiba 299-0107 (JP)**
• **WATANABE, Takeshi**
**Saitama-shi, Saitama 330-0031 (JP)**

(74) Representative: **Prop, Gerrit**
**Gille Hrabal Struck**
**Neidlein Prop Roos**
**Brucknerstrasse 20**
**40593 Düsseldorf (DE)**

(54) **COLORING PIGMENT MASTERBATCH COMPOSITION AND METHOD OF MOLDING**

(57)     The present invention relates to a pigment master batch composition which comprises a specific thermoplastic elastomer, a thermoplastic resin and a pigment and clearly reveals grain-like colored patterns and which can effectively suppress a reduction in a pinch-off part strength and an impact strength caused by a pattern-coloring action, and the above composition can be used not only for blow molding but also injection molding and extrusion molding.

Further, a change in a color tone of a base color can be inhibited even if a recycled material containing pigments is used to carry out molding, and a rate of defectives produced by a difference in a color tone can be controlled.

EP 1 443 069 A1

**Description**

TECHNICAL FIELD

The present invention relates to a pigment master batch composition used for producing a molded article having colored patterns, a production process for the same and a molding method using the above master batch composition, more specifically to a pigment master batch composition which has less coloring loss and gives a good pattern developability to molding materials containing fillers hindering a coloring property as well as ordinary molding materials containing no fillers by adding a small amount thereof, a production process for the same and a molding method using the above master batch composition.

BACKGROUND ART

In recent years, articles such as interior household articles having a grain-like or marble-like colored pattern appearance are spread, and in particular, a lot of articles on which a film having a printed grain pattern or a marble pattern is stuck and articles obtained by fixing a film in a die and integrally injection-molding it to stick the above film on the articles are available in the market as such articles.

However, these methods have the problems that a step for sticking a film is essential and much labor is required and that a printed film is broken or molten in many cases in injecting and filling a base resin, which reduces the yield and they are less liable to be applied to molded articles having curved surfaces and complicated shapes.

In order to solve these problems, proposed is a method in which a resin pellet is dry-blended with a pigment master batch having a relatively inferior dispersibility and the blended matter is molded by injection or melt-extrusion, whereby flow stripes of a pigment are formed by a flowing and stretching effect of the resin in injection or extrusion to produce specific stripe patterns.

However, even this method produces the problems that in blow molding in which a large amount of fins is produced, a base color of a colored pattern is changed and is not stabilized when the fins are recycled and that the impact strength and the pinch-off strength are reduced.

In particular, when a polyolefin base resin is used as a base resin, it tends to be notable.

Further, also in injection molding and extrusion molding, a welding property between a base resin and a colored part in a molding material is not so good, and therefore the problem of a reduction in the impact resistance is occurred in a certain case.

An article having a grain-like appearance molded by the molding method described above has a strong plastic feeling, so that it is not preferred as a grain-like article in many cases.

Accordingly, a resin mixed with a wood powder is subjected to molding in a certain case.

Thus, a wood feeling comes out over the whole part of an article by subjecting the resin mixed with a wooden powder to molding, and the article having the same touch feeling as that of wood comes to be obtained.

However, even if the color pigment master batch described above is dry-blended in order to color a grain pattern on such molding material to carry out injection-, extrusion- or blow-molding, a wood powder becomes a hindrance to make it difficult to produce a grain pattern.

The objects of the present invention are described below.

(1) To provide a color pigment master batch composition having a high welding performance and a high coloring performance in an interface between a colored part and a molding material in order to produce a molded article having a colored pattern.

(2) To provide a color pigment master batch which has less coloring loss and is liable to control a density and of patterns such as grain and a coloring degree thereof and which can provide a clear molded article having less color unevenness even when using a molding material containing a filler hindering a coloring property as well as an ordinary molding material containing no filler by adding a small amount thereof and a production process for the same.

(3) To provide a molding method for producing patterns, wherein in molding in which a molded part after molding is reproduced and reused as a molding material, a change in a color tone of a base color which is brought about by causing color mixing with a pattern-coloring pigment part and a base color pigment part each contained in the reproduced material can be inhibited to control a rate of defectives produced by a difference in a color tone.

DISCLOSURE OF THE INVENTION

Intensive researches repeated by the present inventors in order to solve the problems described above in producing a molded article having grain-like or marble-like colored patterns have resulted in finding that a composition comprising a specific thermoplastic elastomer, a thermoplastic resin and a pigment is a highly practical pigment master batch which clearly reveals grain-like colored patterns and which can effectively suppress a reduction in a pinch-off part strength and an impact strength caused by a pattern coloring action and that it can be used for not only blow molding but also injection molding and extrusion molding. Thus, they have reached the present invention.

Further, attentions have been paid to the fact that a change in a color tone of a base color can be inhibited by scheming a method for blending a pattern coloring-pigment master batch with a base coloring-pigment master batch even if a recycled material containing both pigments described above is used for molding, whereby a rate of defectives produced by a difference in a color tone can be controlled. Thus, they have reached the present invention.

That is, the present invention provides a color pigment master batch composition, a production process for the same and a molding method using the above master batch composition each described below.

1. A color pigment master batch composition, characterized by comprising the following components (A) to (E) as a color pigment master batch which is dry-blended into a molding material to color it:

(A) 30 to 70 % by weight of a thermoplastic elastomer satisfying the following characteristics (i) and (ii):

(i) the thermoplastic elastomer having a higher Vicat softening point than the following standard temperature and a melting point or a flow beginning temperature which is higher by 20°C or more than the standard temperature, wherein the standard temperature is a melting point thereof when a base resin in the molding material is a crystalline resin and a flow beginning temperature of the base resin when the base resin described above is an amorphous resin and
(ii) the thermoplastic elastomer having a higher MFR (melt flow rate) than MFR of the base resin contained in the molding material, provided that MFR's of the thermoplastic elastomer and the base resin are measured on the same conditions,

(B) 5 to 40 % by weight of a polystyrene base thermoplastic resin,
(C) 0 to 40 % by weight of a polyolefin base thermoplastic resin,
(D) 3 to 20 % by weight of a thermoplastic resin having at least one functional group selected from an acid, a hydroxy group and an oxide group, and
(E) 3 to 30 % by weight of a pigment component.

2. The color pigment master batch composition as described in the above item 1, wherein the thermoplastic elastomer of the component (A) is a copolymer of crystalline polyester and amorphous polyester or polyether, and it has a Vicat softening point of 140°C or higher and a melting point of 160°C or higher.

3. The color pigment master batch composition as described in the above item 1, wherein the polystyrene base thermoplastic resin of the component (B) is a copolymer of styrene and ethylene-$\alpha$-olefin having a styrene polymerizing amount of 10 % by weight or more.

4. The color pigment master batch composition as described in the above item 1, wherein the polyolefin base thermoplastic resin of the component (C) comprises at least one of polyethylene and an ethylene-$\alpha$-olefin copolymer.

5. The color pigment master batch composition as described in the above item 1, wherein the thermoplastic resin having at least one functional group of the component (D) is a polystyrene base or polyolefin base thermoplastic resin having a functional group selected from maleic anhydride, carboxylic acid, methacrylic acid, acrylic acid, a hydroxy group and an oxide group.

6. The color pigment master batch composition as described in the above item 1, wherein assuming that the total of the components (B) to (D) is 100 % by weight, a styrene component amount contained therein accounts for 5 % by weight or more, and an ethylene component amount contained therein accounts for 15 % by weight or more.

7. A color pigment master batch comprising the color pigment master batch composition (F) as described in any one of the above items 1 to 6 comprising the components (A) to (E) described above as a core material and a resin (G) which is molten and flows at a lower temperature than a melting point of the core material as a sheath material, wherein the core material is wrapped in the sheath material.

8. The color pigment master batch as described in the above item 7, wherein the resin (G) constituting the sheath material is any one of polyethylene, polypropylene, polystyrene, an ethylene-$\alpha$-olefin copolymer and a styrene-ethylene-$\alpha$-olefin copolymer.

9. The color pigment master batch as described in the above item 7, wherein the resin (G) constituting the sheath material contains a filler.

10. A production process for the color pigment master batch as described in the above item 7, wherein the resin composition (F) constituting the core material and the resin (G) which is molten and flows at a lower temperature than a melting point of the resin composition (F) is co-extruded and pelletized so that the resin (G) becomes the sheath material.

11. The production process for the color pigment master batch as described in the above item 10, wherein the resin composition (F) constituting the core material is pelletized so that it has a length of 1/2 or less based on a length of a targeted color pigment master batch pellet; 1 to 50 parts by weight of the pellet of the above resin composition (F) is blended with 100 parts by weight of the resin (G) which is the sheath material; and then the blended material is extruded at a temperature at which the pellet of the above resin composition (F) is not molten to prepare a pellet in which the core material is wrapped in the sheath material.

12. The production process for the color pigment master batch as described in the above item 10, wherein the resin composition (F) constituting the core material is pelletized and then crushed to obtain a crushed material having an average particle diameter of 1/2 or less based on a length of a targeted color pigment master batch pellet, and 1 to 50 parts by weight of the crushed material is blended with 100 parts by weight of the resin (G) which is the sheath material; and then the blended material is extruded at a temperature at which the crushed material of the above resin composition (F) is not molten to prepare a pellet in which the core material is wrapped in the sheath material.

13. The production process for the color pigment master batch as described in the above item 10, wherein the resin composition (F) constituting the core material which is pelletized or crushed so that it has a particle diameter of 1/2 or less based on that of a targeted color pigment master batch pellet is added through the middle of an extruder, extruding the resin (G) which is the sheath material at a temperature at which the resin composition (F) is not molten in an extruding amount of 1 to 50 parts by weight of the resin composition (F) per 100 parts by weight of the resin (G), and the mixture is further extruded to prepare a pellet in which the core material is wrapped in the sheath material.

14. A molding method for a molded article having a colored pattern on a surface in which a color pigment master batch and a base-coloring pigment master batch are blended with a molding material to carry out molding, characterized by that in the color pigment master batch composition as described in the above item 1, a combination of a toning colorant used for the composition is the same as a combination of a toning colorant in a base-coloring pigment master batch.

15. A molding method for a resin providing a colored pattern on the surface of the molded article as described in the above item 14, satisfying the following item (1):

(1) a combination of a hue of a colorant constituting a pattern-coloring pigment master batch is paired with a combination of a hue of a colorant constituting a base-coloring pigment master batch, and the hues of the paired colorants are at least one selected from hues falling in the same range as those of red, yellow, green, blue and purple which show basic colors in a Munsell hue ring and a hue of at least one selected from grey, black and white.

16. A molding method for a resin providing a colored pattern on the surface of the molded article as described in the above item 14, satisfying the following item (2):

(2) a combination of a hue of a colorant constituting a pattern-coloring pigment master batch is paired with a combination of a hue of a colorant constituting a base-coloring pigment master batch, and a hue of the paired colorants is a hue of a colorant having a hue in which a hue difference $\Delta H$ (a difference in a hue angle) determined from a $L^*$, $a^*$, $b^*$ color specification defined in JIS Z8729 falls in a range of $22.5°$ or less on both sides based on a hue of the other colorant and a hue of at least one selected from grey, black and white.

17. A molding method for a resin providing a colored pattern on the surface of a molded article in which molding is carried out while returning a non-product part produced in a molding step to an article-molding step at a fixed proportion, wherein the color pigment master batch as described in the above item 1 and a base-coloring pigment master batch are used; the base-coloring pigment master batch is produced at a colorant blending proportion obtained by deducting a blending proportion calculated from a corresponding colorant amount of a pattern-coloring pigment portion contained in the returned non-product part described above (hereinafter referred to merely the a reproduced material) from a blending proportion of the colorant required from a base color predetermined for a molded article; and the above base-coloring pigment master batch, a pattern-coloring pigment master batch and a molding resin to which the reproduced material is added at a fixed proportion are dry-blended and molded.

18. A molding method for a resin providing a colored pattern on the surface of a molded article in which molding is carried out while returning a non-product part produced in a molding step to an article-molding step at a fixed proportion, wherein the color pigment master batch as described in the above item 1 and a base-coloring pigment master batch are used; a color pigment master batch obtained by blending the same colorant composition as a pattern-coloring pigment master batch into a resin which is more liable to be molten than a molding material is added to the pattern-coloring pigment master batch, the base-coloring pigment master batch and a molding resin in the same amount as that of a pattern-coloring pigment which is predetermined to be contained in a reproduced material while the reproduced material does not reach an amount added at a fixed proportion at the beginning of molding, and the blended material is molded; and addition thereof is stopped when the reproduced material begins to be added.

19. A molding method for a resin providing a colored pattern on the surface of a molded article in which molding is carried out while returning a non-product part produced in a molding step to an article-molding step at a fixed rate, wherein the color pigment master batch as described in the above item 1 and a base-coloring pigment master batch are used; produced is a color pigment master batch having a blending proportion of a colorant required to be a base color predetermined for the molded article when mixed with a colorant contained in a pattern-coloring pigment master batch at a fixed proportion; and the color pigment master batch described above, the pattern-coloring pigment master batch, the base-coloring pigment master batch and a molding resin to which the reproduced material is added at a constant ratio are dry-blended, and the blended material is molded.

BEST MODE FOR CARRYING OUT THE INVENTION

Color pigment master batch composition

First, the respective components in the color pigment master batch composition of the present invention shall be described in details.

「 Coloring 」 of the color pigment master batch composition of the present invention does not mean to uniformly pigment the molding material and means that observing as the whole of molding, coloring is almost uniform but partially observing, a pigment is ununiformly dispersed and as a result thereof, the molded article is pigmeted so that stripe-like or marble-like patterns are provided on the molded article.

(A) Thermoplastic elastomer (hereinafter abbreviated as TPE)

TPE of the component (A) is a matrix phase in the color pigment master batch composition of the present invention and controls the Vicat softening point, the melting point and the MFR thereof according to the molding resin.

The Vicat softening point of the above TPE is set higher than the standard temperature, wherein when the base resin in the molding material is a crystalline resin, the melting point thereof is the standard, and when the base resin in the molding material is an amorphous resin, the flow beginning temperature thereof is the standard.

When the Vicat softening point of the above TPE is lower than the standard temperature, the pigment master batch is liable to be crushed and dispersed in a feed zone of a plasticize-extruder, and all the pigment is discharged in the extruder. When the material comes out from the extruder, it is monochromatically pigmented, and therefore it is likely that colored patterns can not be provided on the resulting molded article.

When the above TPE is a crystalline material, a melting point of the above TPE is set higher by 20°C or more, preferably 30°C or more than the standard temperature, wherein a melting point (when the base resin is a crystalline resin) of the base resin in the molding material or a flow beginning temperature (when the base resin is an amorphous resin) thereof is the standard.

When the above TPE is an amorphous material, the flow beginning temperature thereof is set higher by 20°C or more, preferably 30°C or more than a melting point or a flow beginning temperature of the base resin described above.

An outlet resin temperature in an extruder for plasticizing a resin is usually higher by 20°C or more than a melting point or a flow beginning temperature of a molding material, and therefore if a melting point or a flow beginning temperature of the above TPE does not satisfy the prescription described above, a pigment is liable to be dispersed in a molten resin in a compressing zone through a metering zone, so that the pigment is dispersed in the molding material staying in a molten state, and it is likely that a colored pattern is not provided on the resulting molded article.

A melt flow index (MFR) of the above TPE is set larger than MFR of the base resin described above. Provided that the MFR's of the TPE and the base resin are measured on the same conditions.

When the MFR of the above TPE is the same as or smaller than the MFR of the base resin, colored patterns are not formed on the surface of the molded article in some portions, and it is difficult to form stripe-like colored patterns such as a straight grain pattern. The MFR of the above TPE is preferably five times as large as the MFR of the base resin from the viewpoint of easiness in forming colored patterns such as a grain pattern.

The base resin contained in the molding material shall not specifically be restricted and includes, for example, polyolefin, polystyrene, polycarbonate, polyacetal, polyester and polyamide.

The examples of the TPE satisfying the characteristics described above include structures in which low melting polymers (soft segment) and high melting polymers (hard segment) are continuous.

A softening temperature, a melt beginning temperature and a viscosity after melting in the color pigment master batch which is important in controlling dispersion of a pigment can be fitted to optional blow-molding, injection-molding and extrusion-molding conditions by the combination of both segments.

To be specific, it is selected from polyester base elastomers, polyamide base elastomers, polyurethane base elastomers and polyolefin base elastomers. Among them, the polyester base elastomers are preferred, and the elastomers which are copolymers of crystalline polyesters and amorphous polyesters and which have a Vicat softening point of 140°C or higher and a melting point of 160°C or higher are particularly preferred.

In the present invention, the polyester base elastomers which can be used as the component (A) include PELPRENE P (polyester.polyether type using aliphatic polyether, manufactured by Toyobo Co., Ltd.), PELPRENE S (polyester.polyester type using aliphatic polyester, manufactured by Toyobo Co., Ltd.), HITREL (multiblock copolymer of a polyesterpolyether type comprising aromatic polyether (mainly PBT) as a hard segment and aliphatic polyether (PTMG or PPG) as a soft segment, manufactured by Du Pont Co., Ltd.) and ROMOD (a product in which crystalline polyester having a high melting point is used for a hard segment and modified polyether is used for a soft segment, manufactured by GE Corporation).

(B) Polystyrene base thermoplastic resin

The polystyrene base thermoplastic resin which is used as the component (B) in the present invention has an important role for an interfacial adhesive strength between the molten molding material and the color pigment master batch.

That is, the action of polystyrene contained in this resin minutely disperses a polymer adhesive component contained in this resin itself and an adhesive component added in combination with this in the master batch and enhances an interfacial adhesive strength between the color pigment master batch and the molding material.

A resin achieving such object is particularly preferably a copolymer of styrene and ethylene-$\alpha$-olefin having a styrene polymerizing amount of 10 % by weight or more.

If the styrene polymerizing amount is less than 10 % by weight, it is difficult to finely disperse the component (A) in the TPE matrix.

The examples of the copolymer of styrene and ethylene-$\alpha$-olefin of the component (B) include SEBS and SEPS.

Selection of the resins having a suitable polymerization ratio of styrene to ethylene from these copolymers makes it possible to adjust the adhesive strength described above.

A styrene component in the component (B) when the molding material is PS, ABS and the like, an ethylene component in the component (B) when it is PE and an $\alpha$-olefin component in the component (B) when it is PP enhance an adhesive property between the color pigment master batch and the molding material.

(C) Polyolefin base thermoplastic resin

The polyolefin base thermoplastic resin of the component (C) is preferably a resin comprising at least one of polyethylene and an ethylene-$\alpha$-olefin copolymer.

This component is an adhesive component contained in the color pigment master batch of the present invention as is the case with the component (B).

In this respect, addition of a suitable amount of this component makes it possible to enhance a fluidity of the color pigment master batch in the molding material which flows in an extrusion passage to obtain colored patterns well extended.

The ethylene-$\alpha$-olefin copolymer includes an ethylene-propylene copolymer, an ethylene-butylene copolymer, an ethylene-octene copolymer and the like.

(D) Thermoplastic resin having at least one functional group selected from an acid, a hydroxy group and an oxide group

The thermoplastic resin of the component (D) is a component for turning the blended matter of the components (A) to (C) described above into an alloy.

Blending of TPE of the component (A) described above and the component (D) which is compatible with both of the components (B) and (C) described above produces an interfacial bond between both and results in enhancing an adhesive strength between both.

The component (D) shall not specifically be restricted as long as it is a thermoplastic resin having at least one functional group selected from an acid, a hydroxy group and an oxide group. A resin obtained by substituting a part of the component (D) with a modified resin provided with a functional group such as maleic acid, carboxylic acid, methacrylic acid, acrylic acid, a hydroxy group, an oxide group, maleic anhydride and an epoxide group is preferred since the compatibility with TPE of the component (A) and both of the components (B) and (C) described above is improved.

Among them, a resin obtained by modifying the styrene base elastomer of the component (B) has a high surface active effect and good distribution onto the surface and therefore can provide a minutely dispersed alloy phase.

Given is, for example, maleic anhydride-modified SEBS having an acid addition amount, if expressed based on $CH_3ONa$, of 10 mg/g or more.

(E) Pigment component

Publicly known pigments may be used regardless of inorganic pigments and organic pigments as long as they are not decomposed to bring about phenomena such as inferior coloring an deteriorated appearance and can be molten and kneaded with the molding material.

However, a production process using the color pigment master batch of the present invention is a technique of a kind of partial coloring, and a part containing the pigment in a high concentration is produced to become a factor in which the pigment itself reduces an adhesive property between the component (A) and the molding material in a certain case.

In order to inhibit such phenomenon, preferably used is the pigment having a good coloring property even at a low concentration and a high affinity to the molding material.

When the molding material is, for example, PP and PE, it is considered to select an organic pigment.

In most cases, both are lipophilic and therefore have a high affinity and a higher coloring ability than inorganic pigments.

Thus, the pigments have to be suitably combined considering affinity between the molding material and the pigment.

Blending amounts of the respective components

The color pigment master batch composition of the present invention can be obtained by melting and kneading the components (A) to (E) in a blending proportion described below or mixing them in a molten state.

The TPE of the component (A) described above is blended in a proportion of 30 to 70 % by weight, preferably 40 to 60 % by weight assuming that the whole color pigment master batch corresponds to 100 % by weight.

If it is less than 30 % by weight, the component other than the component (A) becomes a matrix in the color pigment master batch composition, and therefore it is likely that the color pigment master batch composition is crushed particularly in a feeding part of a plasticize-kneading step to discharge all of the pigment into the molding material at an initial stage of the plasticize-kneading step and that the molding material is monochromatically colored when coming out from an extruder and colored patterns are not formed on the resulting molded article.

If it exceeds 70 % by weight, time is required for melting when a temperature exceeding a melting point of the above TPE is maintained in order to discharge the pigment after passing through a metering zone or the fluidity is reduced, so that colored patterns are not produced in some portions on the surface of the molded article. In particular, it is difficult to form stripe-like colored patterns such as a straight grain pattern.

The polystyrene base thermoplastic resin is blended as the component (B) in a proportion of 5 to 40 % by weight, preferably 5 to 30 % by weight assuming that the whole part of the color pigment master batch composition of the present invention corresponds to 100 % by weight.

The component (B) has an adhesive performance to styrene base resins such as polystyrene and ABS and olefin base resins such as polyethylene and polypropylene.

If the molding material comprises the styrene base resin such as polystyrene and ABS, efficient adhesion can be carried out by selecting the resin having a large styrene polymerizing amount.

If the molding material comprises the olefin base resin such as polyethylene and polypropylene, the resin having a large ethylene-$\alpha$-olefin polymerizing amount is efficient.

Further, according to a ratio of ethylene to $\alpha$-olefin in ethylene-$\alpha$-olefin, the resin having a large ethylene amount is used for polyethylene, and the resin having a large $\alpha$-olefin amount is used for polypropylene.

The component (C) is blended in combination with the component (B) in a proportion of 0 to 40 % by weight, preferably 10 to 30 % by weight assuming that the whole part of the color pigment master batch composition of the present invention corresponds to 100 % by weight.

Blending of the component (C) raises the fluidity after melting the master batch and improves the coloring property, and it upgrades the adhesive property to an olefin base material such as polyethylene and polypropylene.

If a proportion of the component (C) exceeds 40 % by weight, a dispersibility thereof into the component (A) is deteriorated, and the adhesive performance is inversely reduced in a certain case.

The component (D) is blended in a proportion of 3 to 20 % by weight assuming that the whole part of the color pigment master batch composition of the present invention corresponds to 100 % by weight.

If the proportion thereof is less than 3 % by weight, an effect of turning the components (A) to (C) into an alloy is not satisfactory, and if it exceeds 20 % by weight, an increase in the viscosity brought about by excess reaction thereof with the TPE is caused, and hardening brought about by excess adhesion with the pigment component is caused, so that a reduction in the coloring performance is likely to be caused.

If an acid addition amount of the component (D), if expressed based on $CH_3ONa$, is not at least 2 mg $CH_3ONa$/ g or more, the blending amount has to be increased more than necessary, and it is uneconomical.

The coloring property and the adhesive performance are determined according to the contents of the components (B) to (D).

In particular, the polystyrene component amount and the polyethylene component amount are key points, and the suited amounts of these components or more are required.

That is, assuming that the sum of the components (B) to (D) corresponds to 100 % by weight, the polystyrene component amount contained therein accounts preferably for 5 % by weight or more, and the polyethylene component amount accounts preferably for 15 % by weight or more.

In these component amounts, when the copolymer of styrene and α-olefin is used, the styrene component amount is determined from a styrene polymerizing amount ratio of this copolymer, and when the copolymer of ethylene and α-olefin is used, the ethylene component amount is determined by an ethylene polymerizing amount in this copolymer.

In the case of polyethylene, the ethylene component having a polymerizing amount of 100 % is obtained.

A blending amount of the component (E) in the color pigment master batch composition of the present invention is 3 to 30 % by weight, preferably 5 to 20 % by weight.

If it exceeds 30 % by weight, the resulting molded article is likely to be lowered in an impact resistance and a mechanical property, and if it is less than 3 % by weight, the colored patterns become too light.

This component (E) shows the pigment component as a colorant, and when the pigment master batch in which the pigment component is blended into the resin is used, it shows a colorant component contained in the master batch.

When the pigment master batch in which the colorant is blended into polyethylene is used, a polyethylene component contained therein corresponds to the component (C) of the color pigment master batch composition of the present invention.

The color pigment master batch composition of the present invention is pelletized as it is and dry-blended with the molding material as the color pigment master batch, and it is injection-molded, extrusion-molded or blow-molded, whereby a molded article having a pattern appearance is obtained.

However, in products of a small size, a pellet size of an ordinarily pelletized master batch gives too thick stripes in colored patterns, and therefore it is not preferred in a certain case.

When the appearance of the molded article is tried to be fixed, extrusion mottle is caused if the color pigment master batch is not blended into the molding material in a fixed proportion or more, and therefore it is unsuitable to moderately colored products in a certain case.

It has been tried to be solved by decreasing a pellet size of the color pigment master batch as a countermeasure therefor.

That is, it is considered that fine pattern stripes can be colored by decreasing a pellet size of the color pigment master batch and that the pellet number can be increased even if a weight addition rate thereof to the molding material is reduced, so that a dispersion in coloring caused by extrusion mottles can be reduced.

However, if the pellet size is so decreased that these problems can be solved, the pellets of the molding material and the pellets of the color pigment master batch cause classification in a dry-blended state, and the problem that color mottles are rather liable to be produced has been caused.

Investigations further repeated based on the results described above have resulted in inventing a coloring method using a color pigment master batch having a form described below and a production process for the same.

It is a coloring method using the color pigment master batch comprising the color pigment master batch (F) comprising the components (A) to (E) described above as a core material and the resin (G) which is molten and flows at a lower temperature than a melting point of the core material as a sheath material and having a form in which the core material is wrapped in the sheath material.

The form of the core material shall not specifically be restricted as long as it is covered with the sheath material, and a case in which two or more core materials are present in the sheath material is included therein as well.

A finished size of the color pigment master batch is a pellet size which is not smaller than a size of the molding material, and the core material has a diameter of 1/2 or less based on a finished size of the color pigment master batch.

If the core material is larger than this size, the coloring degree is not different so much from those of conventional master batches.

The color pigment master batch thus obtained is dry-blended with the molding material and the color pigment master batch for a base color in a conventional manner, and the blended matter is molded to color the molded article.

In this case, a color component for coloring patters is the resin composition (F) constituting the core material.

That is, the sheath material is combined so that it is molten in a molding step before the core material is molten, and it is molten in the molding material and separated from the core material.

Accordingly, a material which is molten in an extent of a melting temperature of the molding material is selected for the sheath material.

The molding material shall not specifically be restricted as described above.

When the molding material is polypropylene, polyethylene or polystyrene, the resin (G) constituting the sheath material is preferably polypropylene, polyethylene, polystyrene, an ethylene-α-olefin copolymer or a styrene-ethylene-α-olefin copolymer.

Also when the molding material is nylon, polyethylene terephthalate or polybutylene terephthalate, the resin (G) constituting the preferred sheath material described above may be used, but it is disadvantageous in terms of the point that it is less liable to be dissolved in the molding material.

When a material containing a filler such as a wood powder is used for the molding material, a filler is preferably added as well to the resin (G) which is molten and flows at a lower temperature than a melting point of the core material to protect it when the color pigment master batch having a form in which the core material is wrapped in the sheath material is used.

This prevents the core material (F) from being beaten by a rigidity of the molding material, crushed and dispersed.

A process for producing the color pigment master batch of the present invention shall not specifically be restricted and includes the following processes.

(1) A process for producing the color pigment master batch in which the resin composition (F) constituting the core material and the resin (G) which is molten and flows at a lower temperature than a melting point of the resin composition (F) are co-extruded and pelletized so that the resin (G) becomes a core material.

To be more specific, it is a co-extruding process in which a knead-extruding machine for the resin composition (F) of the core material and an extruder for the resin (G) of the sheath material are separately provided and in which the respective outlets of the extruders are connected with a strand die (publicly known core-sheath type die and the like) to extrude the strand while covering the resin composition (F) with the resin (G).

This process has the merit that a color pigment master batch having a homogeneous (like Kintaro candy) core-sheath structure is obtained.

(2) A process for producing the color pigment master batch in which the resin composition (F) constituting the core material is pelletized so that it has a diameter of 1/2 or less based on a pellet diameter of the targeted color pigment master batch and in which 1 to 50 parts by weight of the pellets of the above resin composition (F) is dry-blended with 100 parts by weight of the resin (G) and then the blended matter is extruded on a temperature condition on which the pellets of the resin composition (F) are not molten.

In pelletizing the resin composition (F), if it is pelletized at a diameter exceeding 1/2 based on a pellet diameter of the targeted color pigment master batch, the resin composition (F) can not be covered with the resin (G) when it is extruded together with the resin (G), and in addition thereto, it shall be difficult to draw a strand.

If the pellet diameter is small, merely the color pigment master batch containing plural core materials is prepared, and no specific problems are involved therein. However, if it is too small, the master batch providing only colored patterns in which stripes are extremely fine and short is obtained.

If a blending amount of the resin composition (F) pellets is less than one part by weight, the master batch containing no core materials is increased when the resin composition (F) pellet has a large size. On the other hand, if it is 50 parts by weight or more, too large amount of the core material is present, and a strand can not be draw, so that the pellets turned into the master batch are liable to be broken.

In a production process in which the small-sized pellets resin of the composition (F) which are not molten and the resin (G) staying in a molten state are extruded at the same time to draw a strand, the strand causes necking and therefore can not be not drawn well in many cases.

In such case, pelletization can be carried out without drawing a strand by providing a hot cutting device in an outlet of a strand die.

(3) A process for producing the color pigment master batch in which the resin composition (F) constituting the core material is kneaded, pelletized and then crushed to prepare a crushed material having a diameter of 1/2 or less based on a pellet diameter of the targeted color pigment master batch and in which 1 to 50 parts by weight of the crushed material is dry-blended with 100 parts by weight of the resin (G) which is the sheath material and then the blended material is extruded on a temperature condition on which the crushed material of the resin composition (F) is not molten to prepare a pellet in which the core material is wrapped in the sheath material.

This process is not basically different from the process (2) described above and is effective when it is difficult to knead the resin composition (F) to cut to a small pellet diameter and a length.

(4) A process for producing the color pigment master batch in which the resin composition (F) constituting the core material having a particle diameter of 1/2 or less based on a pellet diameter of the targeted color pigment master batch is added in the middle of extruding the resin (G) which is the sheath material at a temperature at which the resin composition (F) is not molten in an extruding amount of 1 to 50 parts by weight of the resin composition (F) per 100 parts by weight of the resin (G) and in which the mixture is further extruded to prepare a pellet in which the core material is wrapped in the sheath material.

This process is not basically different from the processes (2) and (3) described above, and the resin composition (F) can surely be covered with the resin (G) by adding the resin composition (F) to an extruder at a stage where resin (G) is sufficiently plasticized.

When producing the color pigment master batch used for molding a molded article having grain-like colored patterns containing a filler such as a wood powder, an optional amount of the filler may be added in advance to the resin (G) in the production processes (1) to (4) described above.

Molding method using the color pigment master batch of the present invention

The color pigment master batches obtained by pelletizing the color pigment master batch compositions in any one of the items 1 to 6 described above by a publicly known method and the color pigment master batches in the items 7 to 9 described above are molded by the same method as a molding method carried out in conventional ones having patterns.

It is, for example, a method in which the color pigment master batches obtained by pelletizing the color pigment master batch compositions in any one of the items 1 to 6 described above are added in an amount of 0.1 to 5 parts by weight, preferably 0.2 to 1 part by weight and particularly preferably 0.3 to 0.5 part by weight per 100 parts by weight of the molding material and in which a color pigment master batch of a base color which evenly colors the whole part of the molded article is added, if necessary, in an amount of 1 to 10 parts by weight per 100 parts by weight of the molding material and dry-blended and the blended material is subjected to blow molding, extrusion molding or injection molding.

The molding material may be any one of polypropylene, polyethylene, polystyrene, nylon, polyethylene terephthalate and polybutylene terephthalate as long as it is a thermoplastic resin which can be subjected to blow molding, extrusion molding or injection molding, and polyolefin is particularly suited.

The color pigment master batches produced in the items 7 to 9 by the production processes in the items 10 to 13 described above are molded as well in the same manner as in the molding methods described above.

Patterns colored by molding the color pigment master batches in the items 7 to 9 described above are changed depending on a size, the number and an addition amount of the core material comprising the color pigment master batch composition (F) containing the components (A) to (E) described above, which is included in the color pigment master batch of the present invention.

The large-sized core material is selected and added in order to make a colored stripe thick, and the small-sized core material is selected and added in order to make the colored stripe narrow.

Mere addition of an amount not smaller than an amount in which extrusion mottles are not produced makes it possible to control appearance having less coloring degree to a gradually stronger coloring degree according to preference.

The 「molding material」in the present invention includes the base resin explained above and in addition thereto, the composition comprising optional components such as the other resins, an elastomer, a filler and an additive, which are added if necessary.

The bulking agent includes a filler such as a color pigment of a base color, a wood powder, cellulose, talc, calcium carbonate, magnesium hydroxide, calcium hydroxide and zeolite and an elastomer.

The additive includes an antioxidant, a UV absorber and a dispersant.

When the molding material contains a filler as the bulking agent, the filler component accounts preferably for 60 % or less based on the whole molding material.

If a charging amount thereof exceeds 60 %, it is likely that patterns are not colored because of a hindrance in transfer of the pigment onto the surface of a molded article caused by the filler even if the color pigment master batch of the present invention is used in the manner described above.

In producing a multilayer molded article, a material obtained by dry-blending the color pigment master batch of the present invention and, if necessary, a pigment master batch for a base pigment is used for a color layer.

In this case, the color layer does not have to be an outermost layer, and a transparent layer may be provided for the outermost layer so that the color layer can be observed from the outside.

However, sufficient masking has to be made by the color layer so that a layer insider than the color layer does not grow transparent.

It is allowed in an insider layer than the color layer to use a material containing a wood powder or a material containing no wood powder or to use a material obtained by crushing fins produced in blow molding, scraps produced in extrusion molding and sprues and runners produced in injection molding and blending them into the molding material.

A thickness of the colored outside layer is not larger than an outline size of the color pigment master batch pellet and is about 2 mm or less. If a thickness of the colored outside layer is 1 mm or less, the coloring efficiency grows high, and if it is 0.5 mm or less, the color pigment master batch comes to contribute to coloring without producing wastes.

A thickness of the inside layer shall not specifically be restricted.

Adhesion in an extruded interface between the colored outside layer and the inside layer has to be sufficiently high, and therefore an adhesive layer can be provided between the colored outside layer and the inside layer in order to raise the layer-to-layer adhesion.

More preferred use method of the color pigment master batch of the present invention

When the color pigment master batch of the present invention is used in the manner described above and subjected to extrusion molding, injection molding or blow molding, a molded article having good colored patterns is obtained.

However, in producing in a large amount in actual production, edges, fins, runners and sprues which are unnecessary are inevitably produced, and if they are not recycled and used for the molding material, a molding material cost shall grow high.

In particular, in blow molding, a proportion of fins to a molded article is high in many cases, and therefore if the fins can not be reused, the competitiveness shall be lost.

Edges, fins, runners and sprues which are produced in a molded article having colored patterns have a partially colored pattern part, and this part contains a larger concentration of a pigment than in a peripheral part thereof.

This is crushed to prepare a reproduced pellet in a certain case, and it is added to the molding material in the form of a reproduced pellet. Then, the pigment contained in the colored pattern part in the reproduced material is dispersed in a step of melting the molding material in an extrusion process and mixed with the base color.

As a result thereof, the base color of the product is changed if the reproduced material is contained in the molding material in a large proportion.

This has made it difficult to mold an article having colored patterns making use of a reproduced material in a molding method such as blow molding in which a proportion of a reproduced material is high.

Intensive researches repeated by the present inventors in order to solve this problem have resulted in coming to obtain a molded article which is reduced in a change in a color tone in recycling the material and which has clear colored patterns by controlling the pigment composition of the color pigment master batch and scheming a procedure of molding using this master batch.

Shown in the item 14 described above is a molding method for reducing a change in a color tone in recycling the material by allowing a combination of a toning colorant (the same meaning as a pigment, and hereinafter the pigment shall be referred to as the colorant) used for the composition to be the same as a combination of a toning colorant for the base-coloring pigment master batch.

The same colorant as conventional colorants is used for toning of either the pattern-coloring pigment master batch or the base-coloring pigment master batch, and a colorant of a chromatic color is combined and blended with a colorant of an achromatic color in which a white color is combined with a black color.

The term 「 a toning combination of the color pigment master batch is the same as a toning combination of the base-coloring pigment master batch」 in the present invention means that the respective structural colorants constituting the color pigment master batch and the base-coloring pigment master batch have the same hue and preferably means a substance having the same color tone in both of a lightness and a saturation.

Even if the respective structural colorants have the same hue, the pigment master batches which are different in a hue, a saturation and a lightness can be prepared by changing the blending amounts of the colorants.

For example, in the case of displaying a grain-tone appearance, the pattern-coloring pigment master batch of a dark color and the base-coloring pigment master batch having a high lightness both of which have the same hue can be produced by changing a proportion of the colorants contained in both master batches, particularly a proportion of the white and black colorants even if the same kind of the colorants constituting the pattern-coloring pigment master batch and the base-coloring pigment master batch are selected.

Colored grain stripes having a low lightness can be produced on a base having a high lightness only by blending them with the molding material and molding it, and the appearance of satisfactory grain pattern can be obtained.

When fins produced in molding in such combination are reproduced and reused for the molding material, the base of a new molded article is reduced a little in a lightness, but the base having the same hue can be obtained.

The colorant component contained in the reproduced material can readily be calculated from a proportion of the reproduced material contained in the molding material, and therefore the color tone of the base color can be estimated.

In actual production, however, the base-coloring pigment master batch and the color pigment master batch can not be toned by the same colorant in a certain case.

For example, an internal masking performance is required to the base-coloring pigment master batch, and therefore an organic pigment having a low masking performance is less likely to be used.

On the other hand, an organic pigment having a high coloring performance has to be used for the color pigment master batch in a certain case in order to elevate a color developing property and a saturation of the patterns.

In such case, the way of thinking described above can not be applied.

Then, the invention of the item 15 described above has been reached as a method for suppressing a change in a color tone in mixing colors even in such case.

That is, it is essential that both of the colorants constituting both the color pigment master batches contain colorants having a hue falling in the same range, and it is essential that the colorants have at least one hue selected from red, yellow, green, blue and purple colorants which show fundamental colors in a Munsell hue ring.

Further, it is essential as well that both the colorants constituting both the color pigment master batches contain at least one colorant selected from grey, black and white.

To explain it with reference to the specific examples, when the color pigment master batch comprises red, yellow, black and white colorants, the base-coloring pigment master batch comprises as well red', yellow', black and white colorants, and even if the colorants of red and red' and yellow and yellow' in both pigments are not the same, the hues fall in a fixed range.

The fixed range can optionally be determined according to whether a standard of a uniformity of a color tone required to the product is severe or moderate.

When a uniformity of a color tone required to the product is severe, the 「 hue falling in the same range」 falls preferably in a range shown by the same color specification referred in a Munsell color specification system.

To specifically refer to a yellow color series, when a colorant of yellow 5Y is used for a pattern-coloring pigment, a colorant having a hue of 5GY which is a color between yellow and green may be selected for a base-coloring pigment from 5YR which is a color between red and yellow.

Further, when the other pigment has an intermediate color in the Munsell color specification, the hue falling in a fixed range can contain two kinds of fundamental colors in the above Munsell color specification in a certain case, and in such case, a colorant falling in a range of two adjacent colors in the Munsell hue ring based on the colorant of either one of the pattern-coloring pigment and the base-coloring pigment may be selected.

To specifically refer to a yellow color series, when a colorant of 5GY which is a color between yellow and green is used for the pattern-coloring pigment, a colorant falling in a range of 5Y to 5G may be selected for the base-coloring pigment.

An invention obtained by defining the 「 hue falling in the same range」 defined in the Munsell hue ring in the invention of the item 15 described above by a hue difference ΔH determined from an L*, a*, b* color specification series chromaticity diagram defined in JIS Z8729 is the invention of the item 16 described above.

In the present invention, the colorants contained in the pattern-coloring pigment master batch and the base-coloring pigment master batch are paired.

It means that ΔH (a difference in a hue angle) of the colorants having the same hue series falls within maximum 22.5° on both sides based on a hue of one colorant, and it falls more preferably within 15°, particularly preferably within 10°.

If ΔH described above is larger than 22.5°, a defective rate of the product due to a change in the color tone is increased particularly when a standard for a uniformity of a color tone required to the product is severe, and it is difficult to forecast in advance color mixing. If can be forecasted, it is difficult to take means for controlling a difference in the color tone.

If carrying out the invention described above, an unforeseeable difference in the color tone is less liable to take place even when a reproduced material is mixed to carry out molding, and the color tone can be forecasted in advance from the pigment components mixed.

However, if such change itself in the color tone is not preferred, a rate of producing the defectives can be suppressed by carrying out the invention (molding method) of the item 17 described above.

A procedure for carrying out this invention shall be described below.

(1) The base color and the pattern color of the product are determined in advance, and a colorant blending proportion in the base and a colorant blending proportion of the pattern color are determined.

(2) A pigment content in the pattern color mixed in the base is determined from a proportion of the reproduced material to the molding material.

(3) A colorant blending content in the pattern color mixed in the base determined in (2) is deducted from the colorant blending proportion in the base determined in (1) to produce the base-coloring pigment master batch.

(4) Molding is carried out while adding both the pigment master batches and the reproduced material of a predicted proportion, whereby molding can be carried out with the predicted base color of the product.

Also when a fixed proportion of the reproduced material is added to carry out molding, the reproduced material is not present or short at the beginning of molding.

When the reproduced material is not present or in the base of a molded article in which a proportion of the reproduced material is lower than predicted and the base of a molded article in which the reproduced material is returned in a predicted proportion, a proportion of the colorant contained in the base is different, so that a difference in the color tone is caused.

The invention of the item 18 described above prevents this.

That is, it is a method in which when returned in a fixed proportion, a pigment for coloring a pattern which is mixed in the base is determined in advance and in which when the reproduced material is not present or molding is carried out in a lower return proportion than predicted, the pigment corresponding to the shortage is supplemented to the determined pigment to carry out molding.

In the method for supplementing the pigment, the pigment master batch toned in the same manner as in the pattern-coloring pigment master batch is used.

However, the pigment is not dispersed by the first heat history in the pattern-coloring pigment master batches shown in the items 1 to 7, and therefore it can not be controlled even if the pattern-coloring pigment master batches are added as they are.

Accordingly, an LDPE-made pigment master batch produced in the same colorant proportion as this is prepared.

While the reproduced material can not be arranged, this pigment master batch corresponding only to the color pigment contained in the predicted reproduced material is added to carry out molding.

When the reproduced material can be arranged, the LDPE-made pigment master batch is stopped being added.

When a proportion of the reproduced material is changed in the way of molding, a changed part thereof is made up by this pigment master batch, whereby molding can be finished without causing a change in the color tone.

An addition amount of the LDPE pigment master batch used in order to achieve the base color converged is determined in the following manner:

$$D = A \times R \div (100 - R) \qquad \text{Formula 1}$$

D: an addition amount (a proportion based on the molding material which is assumed to be 100 %: %) of the LDPE-made pigment master batch of the color pigment component added in the state that the reproduced material is not present.

A: an addition proportion (a proportion based on the molding material which is assumed to be 100 %: %) of the pattern-coloring pigment master batch added every time to a molded article.

R: a return proportion (a proportion of the reproduced material contained in the molding material: %).

A degree of a change in the color tone of the base observed when using the molding material containing the reproduced material is determined according to an amount of the pattern-coloring pigment contained in the reproduced material.

That is, the color of the base is changed by a portion corresponding to the pattern-coloring pigment mixed in the base.

A method for almost dissolving this change in the color tone is the invention of the item 19 described above.

An amount of the pigment component contained in the reproduced material can be determined from a proportion of the reproduced material contained in the molding material.

Further, an amount of the base-coloring pigment component is determined from a proportion of the base-coloring pigment master batch added every molding.

The colorant proportion calculated by adding both of them results in determining a color tone of the base in the molded article.

In this case, if the same kind of the colorant is used for the pattern-coloring pigment master batch and the base pigment master batch, the third color pigment master batch is added so that a proportion of the colorant contained in the reproduced material becomes a proportion of the colorant contained in the base pigment master batch, whereby the same color as that of the base colored by the base pigment master batch alone is obtained.

As shown in the items 14 to 16 described above, if the color is complemented so that the hue close to that of the base pigment master batch is obtained even when the colorants having a close color tone are used, the color is close to that of the base colored by the base pigment master batch alone.

The third color pigment master batch used in this case has to be a master batch prepared from a material having a good color dispersibility into the molding material, for example, LDPE.

If mixing is inferior, the color is not mixed well with the pigment component in the colored patterns of the reproduced material to cause color irregularity.

Next, the present invention shall be explained in further details with reference to examples and comparative examples. However, the present invention shall not be restricted by the following examples.

First, the molding materials used in the examples and the comparative examples, the color pigment master batches and the production processes therefor shall be explained below.

The Vicat softening points of the respective materials were measured according to ASTM D 1525, and the melting points thereof were measured by a differential scanning type calorimeter.

(1) Molding material

① Polypropylene (PP): E150GK (MFR: 0.5 g/10 minutes (230°C-2.16 kg), melting point: 160°C) manufactured by Idemitsu Petrochemical Co., Ltd.

② Polyethylene (PE): HDPE 550BR (MFR: 0.29 g/10 minutes (190°C-2.16 kg), melting point: 140°C) manufactured by Idemitsu Petrochemical Co., Ltd.

③ Polystyrene (PS): HIPS HT522 (MFR: 2.0 g/10 minutes (200°C-5 kg), flow beginning temperature : 130°C) manufactured by Idemitsu Petrochemical Co., Ltd.

(2) Pattern-coloring pigment master batches used in Examples 1 to 9 and Comparative Examples 1 to 21

The following components were dry-blended in blending proportions shown in Table 1, Table 2 and Table 3 and kneaded and extruded by means of a twin screw kneader TEM35B manufactured by Toshiba Machine Co., Ltd. in which a condition of C1 up to a dice was set up to 230°C, and strands were cut to a length of 4 mm and a diameter of 2 to 3 mm and pelletized.

(A) polyester base thermoplastic elastomer: manufactured by Toyobo Co., Ltd. (polyester · polyether type using aliphatic polyether)

① Pelprene 150B (melting point: 212°C, Vicat softening point: 190°C, MFR: 20 g/10 minutes-230°C)
② Pelprene P90B (melting point: 203°C, Vicat softening point: 180°C, MFR: 20 g/10 minutes-230°C)
③ Pelprene P70B (melting point: 200°C, Vicat softening point: 170°C, MFR: 20 g/10 minutes-230°C)

(B) Component: polystyrene base thermoplastic resin

① HIPS HT550 (MFR: 12 g/10 minutes, 230°C-2.16 kg), manufactured by Idemitsu Petrochemical Co., Ltd.
② Taftech H1062 (SEBS, styrene amount: 18 %, manufactured by Asahi Kasei Corporation) (MFR: 4.5 g/10 minutes, 230°C-2.16 kg)
③ Taftech H1043 (SEBS, styrene amount: 67 %, manufactured by Asahi Kasei Corporation.) (MFR: 2.0 g/10 minutes, 230°C-2.16 kg)
④ Septon 2004 (SEBS, styrene amount: 18 %, manufactured by Kuraray Co., Ltd.) (MFR: 5.0 g/10 minutes, 230°C-2.16 kg)

(C) Component: polyolefin base thermoplastic resin

① Affinity PL1880 (ethylene-octene copolymer, octene amount: 10 %, manufactured by Du Pont·Dow Co., Ltd.) (MFR: 1.0 g/10 minutes, 190°C-2.16 kg)
② Engage 8100 (ethylene-octene copolymer, octene amount: 30 %, manufactured by Du Pont-Dow Co., Ltd.) (MFR: 1.0 g/10 minutes, 190°C-2.16 kg)
③ J762HP (Block PP, manufactured by Idemitsu Petrochemical Co., Ltd.) (MFR: 12 g/10 minutes, 230°C-2.16 kg)

(D) Thermoplastic resin having at least one functional group selected from acid, a hydroxy group and an oxide group

① Taftech M1913 (maleic anhydride-modified SEBS, styrene amount: 30 %, manufactured by Asahi Kasei Corporation.) (MFR: 5.0 g/10 minutes, 230°C-2.16 kg)
② Nofalloy IE201 (glycidyl methacrylate-modified EPR, manufactured by NOF Corporation.) (MFR: 2.0 g/10 minutes, 190°C-2.16 kg)

(E) Color pigment component (seed pigment blend)
A blended material obtained by mixing four kinds of LDPE-made core pigment master batches containing 60 % of a colorant so that a beige color is obtained after color mixing.

(3) Production process for a color pigment master batch composition (F) pellet which is a core material

The following components were dry-blended and extruded through a strand die having a diameter of 1.5 mm by means of the twin screw kneader (TEM35B manufactured by Toshiba Machine Co., Ltd.), and a strand was drawn while cooling with water so that a tension was applied to the strand as much as possible and cut at a high speed to obtain a small size color pigment master batch composition (F) pellet having a pellet diameter of 0.5 to 0.7 mm and a length of 1 to 1.5 mm (hereinafter abbreviated as the pellet F).

① Pelprene 150B: 45 % by weight (polyester base thermoplastic elastomer, manufactured by Toyobo co., Ltd., melting point: 212°C, Vicat softening point: 190°C, MFR: 20 g/10 minutes)
② Taftech H1062: 10 % by weight (SEBS, manufactured by Asahi Kasei Corporation.)
③ Engage 8100: 15 % by weight (ethylene-octene copolymer, manufactured by Du Pont · Dow Co., Ltd.)
④ Taftech H1911: 5 % by weight (maleic anhydride-modified SEBS, manufactured by Asahi Kasei Corporation.)
⑤ Core pigment: 25 % by weight (beige pigment containing 60 % of a colorant)

(4) Production process for a resin composition (F') pellet which is a core material

The same resin composition was pelletized on the same condition as in the pellet (F) to obtain a small size color pigment-containing resin composition (F') pellet (hereinafter abbreviated as the pellet F'), except that the following component was substituted for the component 1) used for producing the color pigment master batch composition (F) pellet which was a core material.

① Pelprene P90B (polyester base thermoplastic elastomer, manufactured by Toyobo co., Ltd., melting point: 203°C, Vicat softening point: 180°C, MFR: 20 g/10 minutes)

(5) Production process for a color pigment master batch (MB1) in Example 10

① A material obtained by dry-blending 100 parts by weight of low density polyethylene (FZ038, manufactured by Mitsubishi Plastics Inc.) having an MI of 0.5 g/10 minutes at a load of 190°C-2.16 kg with 15 parts by weight of the pellet F was subjected to single shaft extrusion to draw a strand to produce a pellet having a pellet diameter of 3 mm and a length of 4 mm.

To observe the color pigment master batch (hereinafter abbreviated as MB1) thus obtained, it had a core-sheath structure which contained 1 to 2 pieces of the pellet F and was covered with low density polyethylene.

(2) Extruding conditions

① Extruder : VS40-28 manufactured by Tanabe Plastic Co., Ltd.
② Screw revolution number: 35 rpm
③ Extruding temperature: C1, C2 = 140°C, C3 = 145°C, C4 = 150°C, dice = 150°C

As the line goes on C1→C4, it gets close to the dice. C1 corresponds to a lower part of a hopper.

(6) Production process for a color pigment master batch (MB2) in Example 11

(1) The pellet F was fed in an amount of 15 parts by weight per 100 parts by weight of a discharge amount of high density polyethylene described below from a vent port provided in a 3/4 position of an extruder in which high density polyethylene (548B, manufactured by Idemitsu Petrochemical Co., Ltd.) having an MI of 0.34 g/10 minutes at a load of 190°C-2.16 kg was molten and kneaded, and it was further extruded to draw a strand to produce a pellet having a pellet diameter of 3 mm and a length of 4 mm (hereinafter abbreviated as MB2).

To observe the pellet thus obtained, it had a core-sheath structure which contained 1 to 2 pieces of the pellet F and was covered with high density polyethylene.

(2) Extruding conditions

① Extruder : VS40-28 manufactured by Tanabe Plastic Co., Ltd.
② Screw revolution number: 100 rpm; single thread screw having middle drawing in a vent port position
③ Extruding temperature: C1 ∼ dice = 170°C

(7) Production process for a color pigment master batch (MB3) in Example 12

(1) PP (E6561 manufactured by Calp Industry Co., Ltd.) 50 parts by weight containing 53 % by weight of a wood powder was dry-blended with PP (J452HP, manufactured by Idemitsu Petrochemical Co., Ltd.) 50 parts by weight having an MI of 3.5 g/10 minutes at a load of 230°C-2.16 kg, and the blended matter was molten and kneaded by means of a single shaft extruder equipped with a hot cutting device. The pellet F' was fed in an amount of 15 parts by weight per 100 parts by weight of a discharge amount of two kinds of PP described above from a vent port provided in a 3/4 position of the above extruder and extruded to produce a pellet having a pellet diameter of 3 mm and a length of 4 mm (hereinafter abbreviated as MB3) while hot-cutting a strand coming out from the dice at the dice outlet.

To observe the pellet thus obtained, it had a core-sheath structure which contained 1 to 2 pieces of the pellet F and was covered with polypropylene containing a wood powder.

(2) Extruding conditions

① Extruder : a 50 mm single screw extruder manufactured by Nakatani Machine Co., Ltd.
② Screw revolution number: 50 rpm; single screw having middle drawing in a vent port position
③ Extruding temperature: C1 = 160°C, C2 = 170°C, C3 ∼ dice = 175°C

(8) Production process for a color pigment master batch (MB4) in Comparative Example 22

A pellet (hereinafter abbreviated as MB4) was produced in the same manner as in the pellet F, except that the strand die was change so that the pellet obtained had a diameter of 3 mm and a length of 4 mm.

(9) Production process for a color pigment master batch (MB5) in Comparative Example 24

A pellet (hereinafter abbreviated as MB5) was produced in the same manner as in the pellet F', except that the strand die was change so that the pellet obtained had a diameter of 3 mm and a length of 4 mm.

(10) Pigment master batch for base

Used was a beige color pigment master batch which contained 50 % of a colorant and comprised LDPE as a carrier resin and which had a higher lightness than that of the pattern-coloring pigment master batch.

Next, the following evaluating methods were used in the examples and the comparative examples.

(1) Adhesive property

A small-sized multilayer blow molding machine manufactured by Takuma Co., Ltd. charged with the molding material for the outermost and innermost layers and the pigment master batch for an intermediate layer was used to mold a multilayer rectangular bottle. A sample having a square size of 10 × 50 was cut out from the bottle, and the layers were forcibly peeled with the end parts being nipped to evaluate the adhesive state from the interfacial state according to the following criteria:

○: adhered on the whole part
△: partially adhered
×: not adhered at all

(2) Coloring property

Grain stripe appearance of the molded articles (bottles) obtained by the molding methods of the examples and the comparative examples were visually evaluated according to the following criteria:

○: grain stripes of a straight grain pattern were clearly revealed on the whole surface of the bottle
△: stripe feeling of a grain pattern was low or clearness was low, and clearness was low
×: grain patterns were scarcely revealed

Examples 1 to 3 , Comparative Examples 1 to 8

A molding material prepared by adding 0.5 part by weight of a color pigment master batch having a composition shown in Table 1 and 2 parts by weight of the base-coloring pigment master batch described above to 100 parts by weight of polypropylene (PP) E150GK and dry-blending them was used to mold a rectangular bottle by means of a V8 type blow molding machine (accumulator type) manufactured by The Japan Steel Works, Ltd.
The die used for molding was a flat rectangular bottle type die having a volume of 1.8 liter, wherein one face had crimps, and the other face did not have crimps.
In every different example, purging was sufficiently carried out so that an influence was not exerted by the preceding example.
The molding conditions were set to 180°C, 190°C and 210°C from the upper flow of the extruder , and the accumulator head was set to 225°C.
A resin temperature in the outlet of the extruder was 220°C as a measured value.
A molding material-extruding amount for molding one bottle having a volume of 1.8 liter was 0.2 to 0.25 liter; the blow-up ratio was 2 to 3 times; an average wall thickness of the molded article was 2 to 3 mm; and a weight thereof was 170 to 180 g.
The evaluation results thereof are shown in Table 1.

Table 1.

| | Example | | | Comparative Example | | | | | | | |
|---|---|---|---|---|---|---|---|---|---|---|---|
| | 1 | 2 | 3 | 1 | 2 | 3 | 4 | 5 | 6 | 7 | 8 |
| (Molding material) | | | | | | | | | | | |
| Polypropylene | ○ | ○ | ○ | ○ | ○ | ○ | ○ | ○ | ○ | ○ | ○ |
| Polyethylene | | | | | | | | | | | |
| Polystyrene | | | | | | | | | | | |
| (Master batch composition) | | | | | | | | | | | |
| (A) Pelprene P150B | 43 | 45 | 45 | 50 | 45 | 45 | 45 | 45 | 43 | 43 | 43 |
| Pelprene P90B | | | | | | | | | | | |
| Pelprene P70B | | | | | | | | | | | |

Table 1. (continued)

| | Example | | | Comparative Example | | | | | | | |
|---|---|---|---|---|---|---|---|---|---|---|---|
| (Master batch composition) | | | | | | | | | | | |
| (B) HT550 | | | | | | | | | | | |
| Taftech H1062 | 27 | 10 | | | | 15 | | | | | |
| Taftech H1043 | | | 20 | | | | 15 | | | | |
| Septon 2004 | | | | | | | | 15 | | | |
| (C) Affinity L1880 | | | | | | | | | 19 | | |
| Engage 8100 | | 15 | 5 | | | | | | | 19 | |
| J762HP | | | | | 20 | | | | | | 27 |
| (D) Taftech M1913 | 5 | 5 | 5 | | | 5 | 5 | 5 | | | |
| Nofalloy IE201 | | | | | | | | | 5 | 5 | 5 |
| (E) Pigment | 25 | 25 | 25 | 50 | 35 | 35 | 35 | 35 | 33 | 33 | 25 |
| (Evaluation results) | | | | | | | | | | | |
| Adhesive property | ○ | ○ | Δ | × | × | × | × | × | × | × | × |
| Coloring property | Δ | ○ | ○ | ○ | × | ○ | ○ | Δ | ○ | Δ | × |

Examples 4 to 6, Comparative Examples 9 to 14

A molding material prepared by adding 0.5 part by weight of a color pigment master batch having a composition shown in Table 1 and 2 parts by weight of the base-coloring pigment master batch described above to 100 parts by weight of polyethylene (HDPE 550BR) and dry-blending them was used to mold a rectangular bottle by means of the V8 type blow molding machine (accumulator type) manufactured by The Japan Steel Works, Ltd.

The die used for molding, the molding material-extruding amount for molding one bottle, the blow-up ratio and an average wall thickness and a weight of the molded article were the same as in Example 1.

The molding conditions were set to 170°C, 185°C and 200°C from the upstream direction of the extruder, and the accumulator head was set to 215°C.

A resin temperature in the outlet of the extruder was 210°C as a measured value.

The evaluation results thereof are shown in Table 2.

Table 2.

| | Example | | | Comparative Example | | | | | |
|---|---|---|---|---|---|---|---|---|---|
| | 4 | 5 | 6 | 9 | 10 | 11 | 12 | 13 | 14 |
| (Molding material) | | | | | | | | | |
| Polypropylene | | | | | | | | | |
| Polyethylene | ○ | ○ | ○ | ○ | ○ | ○ | ○ | ○ | ○ |
| Polystyrene | | | | | | | | | |
| (Master batch composition) | | | | | | | | | |
| (A) Pelprene P150B | | | | | | | | | |
| Pelprene P90B | 43 | 45 | 45 | 50 | 45 | 45 | 45 | 43 | 43 |
| Pelprene P70B | | | | | | | | | |
| (B) HT550 | | | | | | | | | |
| Taftech H1062 | 27 | 10 | | | 15 | | | | |
| Taftech H1043 | | | 20 | | | 15 | | | |

Table 2.   (continued)

| | Example | | | Comparative Example | | | | | |
|---|---|---|---|---|---|---|---|---|---|
| (Master batch composition) | | | | | | | | | |
| Septon 2004 | | | | | | | 15 | | |
| (C) Affinity L1880 | | | | | | | | 19 | |
| Engage 8100 | | 15 | 5 | | | | | | 19 |
| J762HP | | | | | | | | | |
| (D) Taftech M1913 | 5 | 5 | 5 | 5 | 5 | 5 | | | |
| Nofalloy IE201 | | | | | | | | 5 | 5 |
| (E) Pigment | 25 | 25 | 25 | 50 | 35 | 35 | 35 | 33 | 33 |
| (Evaluation results) | | | | | | | | | |
| Adhesive property | ○ | ○ | Δ | × | × | × | × | × | × |
| Coloring property | Δ | ○ | ○ | ○ | ○ | ○ | Δ | Δ | Δ |

Examples 7 to 9 and Comparative Examples 15 to 21

A molding material prepared by adding 0.5 part by weight of a color pigment master batch having a composition shown in Table 1 and 2 parts by weight of the base-coloring pigment master batch described above to 100 parts by weight of polystyrene (HIPS HT52) and dry-blending them was used to mold a rectangular bottle by means of the V8 type blow molding machine (accumulator type) manufactured by The Japan Steel Works, Ltd.

The die used for molding, the molding material-extruding amount for molding one bottle, the blow-up ratio and an average wall thickness and a weight of the molded article were the same as in Example 1.

The molding conditions were set to 170°C, 180°C and 190°C from the upstream direction of the extruder, and the accumulator head was set to 210°C.

A resin temperature in the outlet of the extruder was 205°C as a measured value.

The evaluation results thereof are shown in Table 3.

Table 3.

| | Example | | | Comparative Example | | | | | | |
|---|---|---|---|---|---|---|---|---|---|---|
| | 7 | 8 | 9 | 15 | 16 | 17 | 18 | 19 | 20 | 21 |
| (Molding material) | | | | | | | | | | |
| Polypropylene | | | | | | | | | | |
| Polyethylene | | | | | | | | | | |
| Polystyrene | ○ | ○ | ○ | ○ | ○ | ○ | ○ | ○ | ○ | ○ |
| (Master batch composition) | | | | | | | | | | |
| (A) Pelprene P150B | | | | | | | | | | |
| Pelprene P90B | | | | | | | | | | |
| Pelprene P70B | 43 | 45 | 45 | 50 | 45 | 45 | 45 | 45 | 43 | 43 |
| (B) HT550 | | | | | | | | | | |
| Taftech H1062 | 27 | 10 | | | | 15 | | | | |
| Taftech H1043 | | | 20 | | | | 15 | | | |
| Septon 2004 | | | | | | | | 15 | | |
| (C) Affinity L1880 | | | | | | | | | 19 | |
| Engage 8100 | | 15 | | | | | | | | 19 |

Table 3.   (continued)

| | Example | | | Comparative Example | | | | | | |
|---|---|---|---|---|---|---|---|---|---|---|
| (Master batch composition) | | | | | | | | | | |
| J762HP | | | | | | | | | | |
| (D) Taftech M1913 | 5 | 5 | 5 | | 5 | 5 | 5 | 5 | | |
| Nofalloy IE201 | | | | | | | | | 5 | 5 |
| (E) Pigment | 25 | 25 | 25 | 50 | 35 | 35 | 35 | 35 | 33 | 33 |
| (Evaluation results) | | | | | | | | | | |
| Adhesive property | Δ | Δ | ○ | Δ | × | × | × | × | × | × |
| Coloring property | Δ | ○ | ○ | × | × | Δ | ○ | × | × | × |

Example 10

(1) A material (hereinafter referred to as a natural molding material) obtained by blending 2 parts by weight of an LD-made base pigment master batch and 0.2 part by weight of MB1 with 100 parts by weight of block polypropylene (E-150GK, manufactured by Idemitsu Petrochemical Co., Ltd., MFR = 0.5 g/10 minutes) was prepared, and then 50 bottles of a flat rectangular bottle having a volume of one liter were molded at a parison extruding temperature of 223°C (dice temperature: set to 215°C) by means of the V8 type blow molding machine (accumulator type) manufactured by The Japan Steel Works, Ltd.

One bottle had a parison weight of 220 g, and the blow-up ratio was set to 2 to 3 times.

The molded bottle was crushed by means of a crusher, and the resulting crushed material was blended with 0.2 part by weight of MB1 and further blended with the same weight of the natural molding material to prepare a new molding material. Then, 50 pieces of the bottles were molded on the same conditions as the molding conditions described above.

In a series of moldings, the molding material was charged into a material feeding hopper of the extruder through an air-delivering line by vacuum suction.

The appearance of the molded articles obtained above and a dispersion in the colored patterns by bottle were evaluated.

The appearance (grain feeling) was evaluated according to the following criteria:

○: striped grains (straight grain) are suitably revealed
Δ: grain stripes are too few (low pattern density)
▽: grain stripes are too many (high pattern density)

Further, the patterns which could not be recognized as a grain were shown by ×.

A dispersion in the colored patterns by every bottle was evaluated according to the following criteria:

○: the same colored patterns are observed on the whole part
Δ: a part in which the colored patterns are partially lost is observed or at least one pattern has too thick straight grain stripe
×: the inferior phenomenon described above is observed in about 1/5 of the whole bottle.

(2) Molding and evaluation were carried out in the same manners as in (1), except that after finishing molding of the bottle in (1), purging was carried out with block polypropylene described above, and then 2 parts by weight of MB for a base and 0.4 part by weight of MB1 were blended.

Hereinafter, whenever the blending amount of MB1 was changed to 0.6, 0.8 and 1 part by weight, purging was sufficiently carried out, and then molding and evaluation were carried out.

(3) The evaluation results thereof are shown in Table 4.

Table 4

| | 0.2 part | 0.4 part | 0.6 part | 0.8 part | 1 part |
|---|---|---|---|---|---|
| Appearance (grain feeling) | × | Δ | ○ | ○ | ○ |

Table 4 (continued)

|  | 0.2 part | 0.4 part | 0.6 part | 0.8 part | 1 part |
|---|---|---|---|---|---|
| Dispersion in pattern | × | ○ | ○ | ○ | ○ |

Example 11

(1) Molding and evaluation were carried out in the same manners as in Example 10, except that MB1 was changed to MB2.
(2) The evaluation results thereof are shown in Table 5.

Table 5

|  | 0.2 part | 0.4 part | 0.6 part | 0.8 part | 1 part |
|---|---|---|---|---|---|
| Appearance (grain feeling) | × | Δ | ○ | ○ | ○ |
| Dispersion in pattern | × | ○ | ○ | ○ | ○ |

Example 12

(1) An LD-made base pigment master batch 2 parts by weight and 0.5 part by weight of MB3 were blended with polypropylene (E-6561, manufactured by Calp Industry Co., Ltd.) 100 parts by weight containing 53 % by weight of a wood powder, and a sheet having a width of 30 mm and a thickness of 2 mm was continuously extrusion-molded at a resin temperature of 215°C (dice) for one hour by means of a 50 mm extrusion-molding machine (manufactured by Cosmotech Co., Ltd.).
The materials used in this molding were fed by a method in which the blending materials were fed directly into a hopper by a man power.
The sheet thus obtained was cut to a length of every 50 cm to evaluate the appearance of the respective sheets and a dispersion in the colored pattern of every sheet.
The appearance (grain feeling) was evaluated in the same manner as in Example 10.
(2) Molding and evaluation were carried out in the same manners as in (1), except that after finishing molding of the sheet in (1), purging was carried out with normal polypropylene, and then 2 parts by weight of MB for a base and 1 part by weight of MB3 were blended.
Hereinafter, the blending amount of MB3 was changed to 2, 3 and 4 parts by weight to carry out molding and evaluation.
(3) The evaluation results thereof are shown in Table 6.

Table 6

|  | 0.5 part | 1 part | 2 parts | 3 parts | 4 parts |
|---|---|---|---|---|---|
| Appearance (grain feeling) | Δ | ○ | ○ | ○ | ○ |

Comparative Example 22

(1) Molding and evaluation were carried out in the same manners as in Example 10, except that MB1 was changed to MB4.
(2) The evaluation results thereof are shown in Table 7.

Table 7

|  | 0.2 part | 0.4 part | 0.6 part | 0.8 part | 1 part |
|---|---|---|---|---|---|
| Appearance (grain feeling) | ○ | ▽ | ▽ | × | × |

Table 7   (continued)

|  | 0.2 part | 0.4 part | 0.6 part | 0.8 part | 1 part |
|---|---|---|---|---|---|
| Dispersion in pattern | × | ○ | ○ | ○ | ○ |

Comparative Example 23

(1) Molding and evaluation were carried out in the same manners as in Example 10, except that MB1 was changed to the small-sized color pigment master batch resin composition (F) pellet from which MB1 was prepared.
(2) The evaluation results thereof are shown in Table 8.

Table 8

|  | 0.2 part | 0.4 part | 0.6 part | 0.8 part | 1 part |
|---|---|---|---|---|---|
| Appearance (grain feeling) | ○ | ▽ | ▽ | × | × |
| Dispersion in pattern | × | × | × | × | × |

Comparative Example 24

(1) Molding and evaluation were carried out in the same manners as in Example 12, except that MB3 was changed to MB5.
(2) The evaluation results thereof are shown in Table 9.

Table 9

|  | 0.5 part | 1 parts | 2 parts | 3 parts | 4 parts |
|---|---|---|---|---|---|
| Appearance (grain feeling) | × | × | Δ | Δ | × |

Comparative Example 25

(1) Molding and evaluation were carried out in the same manners as in Example 12, except that MB3 was changed to the small sized color pigment-containing resin composition (F') pellet from which MB3 was prepared.
(2) The evaluation results thereof are shown in Table 10.

Table 10

|  | 0.5 part | 1 parts | 2 parts | 3 parts | 4 parts |
|---|---|---|---|---|---|
| Appearance (grain feeling) | Δ | Δ | × | × | × |

Example 13 ①

The pigment master batch ① for a base of 2 % by weight and the pattern-coloring pigment master batch ④ of 0.5 % by weight each shown in Table 1 were blended with polypropylene (E150GK, manufactured by Idemitsu Petrochemical Co., Ltd.) by means of the V8 type blow molding machine manufactured by The Japan Steel Works, Ltd. using a rectangular bottle die having a volume of one litter to blow-mold a blow-molded article having a grain-like appearance on conditions shown below in one lot per 10 shots.

Extruder set temperature: 180 to 200°C (hopper side→front of an accumulator head)

Accumulator head: set temperature 220°C, resin temperature in the outlet of the extruder : 200°C, resin temperature of a parison: 235°C

Example 13 ② and Example 13 ③

Blow molding was carried out in the same manner as in Example 13 ① , except that a reproduced material produced in molding in Example 13 ① was used in a proportion of 50 % by weight based on the whole molding material, and the base color pigment master batch was reduced to 1 % by weight.

Example 14 ① to Example 19 ①

Blow molding was carried out in the same manner as in Example 13 ① , except that pigments described in Table 12 were used.

Example 14 ② to Example 19 ②

The same operation as in Example 13 ② and Example 13 ③ was carried out, except that reproduced materials obtained in Example 14 ① to Example 19 ① and pigments described in Table 12 were used.

A difference in the bases of the bottles produced in Example 13 to Example 19 was confirmed by lot described in Table 12 to visually judge whether or not they were defectives due to color difference with the first lot being set as a standard for the acceptable product.

The results thereof are shown in Table 13.

Acceptance: a difference in the base color from the first lot is not observed. Allowable range: a difference in the base color from the first lot can be observed, but it can be accepted as the product.

Defective: a difference in the base color from the first lot is notably observed, and it can not be accepted as the product.

Table 11

| | Purpose of pigment | Carrier material/wt% | Ingredient of colorant (wt%) | |
|---|---|---|---|---|
| Pigment MB ① (medium beige) | Base | LDPE/40 | White 6 | 6 |
| | | | Red 101 | 5 |
| | | | Brown 24 | 88 |
| | | | Black 7 | 1 |
| Pigment MB ② (light beige) | Base | LDPE/40 | White 6 | 48 |
| | | | Red 101 | 16 |
| | | | Brown 24 | 34 |
| | | | Black 7 | 2 |
| Pigment MB ③ (orange) | Base | LDPE/40 | White 6 | 26 |
| | | | Yellow 110 | 42 |
| | | | Orange 64 | 26 |
| | | | Black 7 | 6 |
| Pigment MB ④ (dark brown) | Pattern Coloring | Pelprene P150B/45 | White 6 | 4 |
| | | | Yellow 119 | 37 |
| | | | Red 101 | 7 |
| | | | Black 7 | 52 |

Table 11   (continued)

| | Purpose of pigment | Carrier material/wt% | Ingredient of colorant (wt%) | |
|---|---|---|---|---|
| Pigment MB ⑤ (dark brown) | Pattern Coloring | Pelprene P150B/45 | White 6 | 3 |
| | | | Red 101 | 20 |
| | | | Brown 24 | 72 |
| | | | Black 7 | 5 |
| Pigment MB ⑥ (white wood color) | Pattern Coloring | Pelprene P150B/45 | White 6 | 80 |
| | | | Yellow 119 | 1 |
| | | | Brown 24 | 2 |
| | | | Black 7 | 17 |
| Pigment MB ⑦ (dark purple) | Pattern Coloring | Pelprene P150B/45 | White 6 | 14 |
| | | | Red 101 | 62 |
| | | | Violet 19 | 11 |
| | | | Black 7 | 13 |
| Pigment MB ⑧ (dark brown) | Color tone adjust | LDPE/40 | White 6 | 3 |
| | | | Red 101 | 20 |
| | | | Brown 24 | 72 |
| | | | Black 7 | 5 |
| Pigment MB ⑨ (white wood color) | Color tone adjust | LDPE/40 | White 6 | 80 |
| | | | Yellow 119 | 1 |
| | | | Brown 24 | 2 |
| | | | Black 7 | 17 |

*A carrier material compositions in Pigment MB④ to⑦ is the same as in Example 2 in which Pelprene P150B is the principal component.

**A carrier material composition in Pigment MB① to③ and⑧ to⑨ comprises 40 wt % of LDPE and 60 wt % of the colorant.

Table 12

| | Sample | Sampling number in collecting sample | Return material mixing rate (wt %) | Kind and added amount of base pigment (wt %) | Kind and added amount of pattern-coloring pigment (wt %) | Kind and added amount of color tone-controlling pigment (wt%) |
|---|---|---|---|---|---|---|
| 13 | ① | First lot | 0 | Pigment ① 2 wt % | Pigment ④ 0.5 wt % | |
| | ② | Third lot | 50 | Pigment ① 1 wt % | Pigment ④ 0.5 wt % | |
| | ③ | Fifth lot | 50 | Pigment ① 1 wt % | Pigment ④ 0.5 wt % | |
| 14 | ① | First lot | 0 | Pigment ① 2 wt % | Pigment ⑤ 0.5 wt % | |
| | ② | Third lot | 50 | Pigment ① 1 wt % | Pigment ⑤ 0.5 wt % | |
| | ③ | Fifth lot | 50 | Pigment ① 1 wt % | Pigment ⑤ 0.5 wt % | |
| 15 | ① | First lot | 0 | Pigment ① 2 wt % | Pigment ⑤ 0.5 wt % | Pigment ⑧ 0.25 wt % |
| | ② | Third lot | 50 | Pigment ① 1 wt % | Pigment ⑤ 0.5 wt % | |
| 16 | ① | First lot | 0 | Pigment ② 2 wt % | Pigment ⑥ 0.5 wt % | Pigment ⑨ 0.25 wt % |
| | ② | Third lot | 50 | Pigment ② 1 wt %. | Pigment ⑥ 0.5 wt % | |
| 17 | ① | First lot | 0 | Pigment ② 2 wt % | Pigment ⑤ 0.5 wt % | |
| | ② | Third lot | 70 | Pigment ② 0.6 wt % | Pigment ⑤ 0.5 wt % | |
| 18 | ① | First lot | 0 | Pigment ② 2 wt % | Pigment ⑤ 0.5 wt % | Pigment ⑧ 0.58 wt % |
| | ② | Third lot | 70 | Pigment ② 0.6 wt % | Pigment ⑤ 0.5 wt % | |
| 19 | ① | First lot | 0 | Pigment ③ 2 wt % | Pigment ⑦ 0.3 wt % | |
| | ② | Third lot | 70 | Pigment ③ 1.4 wt % | Pigment ⑦ 0.3 wt % | |

EP 1 443 069 A1

Table 13

| Comparative Sample | Color tone of base of bottle | Result |
|---|---|---|
| 13 ① /13 ② | Beige/dark brownish beige | Allowable range |
| 13 ① /13 ③ | Beige/dark brown | Defective |
| 14 ① /14 ③ | Beige/strong beige | Allowable range |
| 15 ① /15 ② | Strong beige/strong beige | Acceptance |
| 16 ① /16 ② | Beige/beige | Acceptance |
| 17 ① /17 ② | Light beige/dark brown | Defective |
| 18 ① /18 ② | Dark brown/dark brown | Acceptance |
| 19 ① /19 ② | Bright orange/fairly dark purple | Defective |

INDUSTRIAL APPLICABILITY

According to the color pigment master batch of the present invention, even if molding is carried out on conventional molding conditions, colored patterns such as a gain pattern are clearly revealed, and an interfacial adhesive strength between the colored pattern part and the molding material is enhanced, so that the molded article is improved in an impact resistance and physical properties. Further, a clear appearance is obtained even if the molding material contains a filler such as a wood powder in a high concentration.

When using the color pigment master batch of the present invention, a molded article which has no deviation in pattern coloring and has less dispersion in appearance in continuous production and which has a pattern appearance such as a grain can be obtain by a simple method such as dry blending.

Further, according to the present invention, capable of being obtained is a blow-molded article in which a grain pattern is distinctly revealed even by molding on conventional molding conditions and physical properties are less reduced and which scarcely causes a change in a grain pattern and a color even if a recycled material is mixed with the molding material and has a stable grain-like appearance.

**Claims**

1.   A color pigment master batch composition, **characterized by** comprising the following components (A) to (E) as a color pigment master batch which is dry-blended into a molding material to color it:

(A) 30 to 70 % by weight of a thermoplastic elastomer satisfying the following characteristics (i) and (ii):

(i) the thermoplastic elastomer having a higher Vicat softening point than the following standard temperature and a melting point or a flow beginning temperature which is higher by 20°C or more than the standard temperature, wherein the standard temperature is a melting point thereof when a base resin in the molding material is a crystalline resin and a flow beginning temperature of the base resin when the base resin described above is an amorphous resin and

(ii) the thermoplastic elastomer having a higher MFR (melt flow rate) than MFR of the base resin in the molding material, provided that MFR's of the thermoplastic elastomer and the base resin are measured on the same conditions,

(B) 5 to 40 % by weight of a polystyrene base thermoplastic resin,
(C) 0 to 40 % by weight of a polyolefin base thermoplastic resin,
(D) 3 to 20 % by weight of a thermoplastic resin having at least one functional group selected from an acid, a hydroxy group and an oxide group, and
(E) 3 to 30 % by weight of a pigment component.

2.   The color pigment master batch composition as described in claim 1, wherein the thermoplastic elastomer of the component (A) is a copolymer of crystalline polyester and amorphous polyester or polyether, and it has a Vicat softening point of 140°C or higher and a melting point of 160°C or higher.

3. The color pigment master batch composition as described in claim 1, wherein the polystyrene base thermoplastic resin of the component (B) is a copolymer of styrene and ethylene-$\alpha$-olefin having a styrene polymerizing amount of 10 % by weight or more.

4. The color pigment master batch composition as described in claim 1, wherein the polyolefin base thermoplastic resin of the component (C) comprises at least one of polyethylene and an ethylene-$\alpha$-olefin copolymer.

5. The color pigment master batch composition as described in claim 1, wherein the thermoplastic resin having at least one functional group of the component (D) is a polystyrene base or polyolefin base thermoplastic resin having a functional group selected from maleic anhydride, carboxylic acid, methacrylic acid, acrylic acid, a hydroxy group and an oxide group.

6. The color pigment master batch composition as described in claim 1, wherein assuming that the total of the components (B) to (D) is 100 % by weight, a styrene component amount contained therein accounts for 5 % by weight or more, and an ethylene component amount contained therein accounts for 15 % by weight or more.

7. A color pigment master batch comprising the color pigment master batch composition (F) as described in any of claims 1 to 6 comprising the components (A) to (E) described above as a core material and a resin (G) which is molten and flows at a lower temperature than a melting point of the core material as a sheath material, wherein the core material is wrapped in the sheath material.

8. The color pigment master batch as described in claim 7, wherein the resin (G) constituting the sheath material is any one of polyethylene, polypropylene, polystyrene, an ethylene-$\alpha$-olefin copolymer and a styrene-ethylene-$\alpha$-olefin copolymer.

9. The color pigment master batch as described in claim 7, wherein the resin (G) constituting the sheath material contains a filler.

10. A production process for the color pigment master batch as described in claim 7, wherein the resin composition (F) constituting the core material and the resin (G) which is molten and flows at a lower temperature than a melting point of the resin composition (F) is co-extruded and pelletized so that the resin (G) becomes the sheath material.

11. The production process for the color pigment master batch as described in claim 10, wherein the resin composition (F) constituting the core material is pelletized so that it has a length of 1/2 or less based on a length of a targeted color pigment master batch pellet; 1 to 50 parts by weight of the pellet of the above resin composition (F) is blended with 100 parts by weight of the resin (G) which is the sheath material; and then the blended material is extruded at a temperature at which the pellet of the above resin composition (F) is not molten to prepare a pellet in which the core material is wrapped in the sheath material.

12. The production process for the color pigment master batch as described in claim 10, wherein the resin composition (F) constituting the core material is pelletized and then crushed to obtain a crushed material having an average particle diameter of 1/2 or less based on a length of a targeted color pigment master batch pellet, and 1 to 50 parts by weight of the crushed material is blended with 100 parts by weight of the resin (G) which is the sheath material; and then the blended material is extruded at a temperature at which the crushed material of the above resin composition (F) is not molten to prepare a pellet in which the core material is wrapped in the sheath material.

13. The production process for the color pigment master batch as described in claim 10, wherein the resin composition (F) constituting the core material which is pelletized or crushed so that it has a particle diameter of 1/2 or less based on that of a targeted color pigment master batch pellet is added through the middle of an extruder, extruding the resin (G) which is the sheath material at a temperature at which the resin composition (F) is not molten in an extruding amount of 1 to 50 parts by weight of the resin composition (F) per 100 parts by weight of the resin (G), and the mixture is further extruded to prepare a pellet in which the core material is wrapped in the sheath material.

14. A molding method for a molded article having a colored pattern on a surface in which a color pigment master batch and a base-coloring pigment master batch are blended with a molding material to carry out molding, **characterized by** that in the color pigment master batch composition as described in claim 1, a combination of a toning colorant used for the composition is the same as a combination of a toning colorant in a base-coloring pigment master batch.

**15.** A molding method for a resin providing a colored pattern on the surface of the molded article as described in claim 14, satisfying the following item (1):

(1) a combination of a hue of a colorant constituting a pattern-coloring pigment master batch is paired with a combination of a hue of a colorant constituting a base-coloring pigment master batch, and the hues of the paired colorants are at least one selected from hues falling in the same range as those of red, yellow, green, blue and purple which show basic colors in a Munsell hue ring and a hue of at least one selected from grey, black and white.

**16.** A molding method for a resin providing a colored pattern on the surface of the molded article as described in claim 14, satisfying the following item (2):

(2) a combination of a hue of a colorant constituting a pattern-coloring pigment master batch is paired with a combination of a hue of a colorant constituting a base-coloring pigment master batch, and the hues of the paired colorants are a hue of a colorant having a hue in which a hue difference $\Delta H$ (a difference in a hue angle) determined from a L*, a*, b* color specification defined in JIS Z8729 falls in a range of 22.5° or less on both sides based on a hue of the other colorant and a hue of at least one selected from grey, black and white.

**17.** A molding method for a resin providing a colored pattern on the surface of a molded article in which molding is carried out while returning a non-product part produced in a molding step to an article-molding step at a fixed proportion, wherein the color pigment master batch as described in claim 1 and a base-coloring pigment master batch are used; the base-coloring pigment master batch is produced at a colorant blending proportion obtained by deducting a blending proportion calculated from a corresponding colorant amount of a pattern-coloring pigment portion contained in the returned non-product part described above (hereinafter referred to merely as the reproduced material) from a blending proportion of the colorant required from a base color predetermined for a molded article; and the above base-coloring pigment master batch, a pattern-coloring pigment master batch and a molding resin to which the reproduced material is added at a fixed proportion are dry-blended and molded.

**18.** A molding method for a resin providing a colored pattern on the surface of a molded article in which molding is carried out while returning a non-product part produced in a molding step to an article-molding step at a fixed proportion, wherein the color pigment master batch as described in claim 1 and a base-coloring pigment master batch are used; a color pigment master batch obtained by blending the same colorant composition as a pattern-coloring pigment master batch into a resin which is more liable to be molten than a molding material is added to the pattern-coloring pigment master batch, the base-coloring pigment master batch and a molding resin in the same amount as that of a pattern-coloring pigment which is predetermined to be contained in a reproduced material while the reproduced material does not reach an amount added at a fixed proportion at the beginning of molding, and the blended material is molded; and addition thereof is stopped when the reproduced material begins to be added.

**19.** A molding method for a resin providing a colored pattern on the surface of a molded article in which molding is carried out while returning a non-product part produced in a molding step to an article-molding step at a fixed rate, wherein the color pigment master batch as described in claim 1 and a base-coloring pigment master batch are used; produced is a color pigment master batch having a blending proportion of a colorant required to be a base color predetermined for the molded article when mixed with a colorant contained in a pattern-coloring pigment master batch at a fixed proportion; and the color pigment master batch described above, the pattern-coloring pigment master batch, the base-coloring pigment master batch and a molding resin to which the reproduced material is added at a fixed proportion are dry-blended, and the blended material is molded.

## INTERNATIONAL SEARCH REPORT

| International application No. |
|---|
| PCT/JP02/10751 |

A. CLASSIFICATION OF SUBJECT MATTER
     Int.Cl$^7$  C08J3/22, C08L101/00, 23/00, C08K3/00, 5/00//(C08L23/00,
              C08L67:00, C08L25:00, C08L23/26)

According to International Patent Classification (IPC) or to both national classification and IPC

B.  FIELDS SEARCHED

Minimum documentation searched (classification system followed by classification symbols)
     Int.Cl$^7$  C08J3/22, C08L23/00-36, 67/00-08, 25/00-18

Documentation searched other than minimum documentation to the extent that such documents are included in the fields searched

Electronic data base consulted during the international search (name of data base and, where practicable, search terms used)
     DIALOG(WPI/L)

C.  DOCUMENTS CONSIDERED TO BE RELEVANT

| Category* | Citation of document, with indication, where appropriate, of the relevant passages | Relevant to claim No. |
|---|---|---|
| P,X | EP 1201702 A1   (IDEMITSU PETROCHEMICAL CO., LTD.), 02 May, 2002 (02.05.02), | 1-2,4-5, 14-19 |
| P,A | Claims; Par. Nos. [0012] to [0039] & WO 01/81455 A1        & JP 2001-294671 A | 3,6-13 |
| P,X | JP 2002-096376 A  (Idemitsu Petrochemical Co., | 1-6,14-19 |
| P,A | Ltd.), 02 April, 2002 (02.04.02), Claims; Par. Nos. [0018] to [0041], [0078] (Family: none) | 7-13 |
| P,A | JP 2001-302808 A  (Okura Industrial Co., Ltd.), 31 October, 2001 (31.10.01), Claims; Par. Nos. [0009] to [0021] (Family: none) | 1-19 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 January, 2003 (14.01.03) | 28 January, 2003 (28.01.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP02/10751 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 8-3417 A (Asahi Chemical Industry Co., Ltd.),<br>09 January, 1996 (09.01.96),<br>Claims; Par. Nos. [0012], [0028] to [0030],<br>[0044] to [0057]<br>& TW 353671 A | 1-6<br>7-19 |
| Y<br>A | JP 8-216233 A (Toyo Seikan Kaisha, Ltd.),<br>27 August, 1996 (27.08.96),<br>Claims; Par. Nos. [0034] to [0039], [0044],<br>[0050] to [0071]<br>(Family: none) | 1-6,14-16<br>7-13 |
| Y<br>A | EP 930330 A2 (Mitsubishi Polyester Film Co.),<br>21 July, 1999 (21.07.99),<br>Claims; Par. Nos. [0005] to [0007], [0029]<br>& US 6235374 A          & JP 11-227139 A<br>& JP 11-268215 A | 14-19<br>1-13 |
| Y<br>A | JP 11-43582 A (Techno Polymer Co., Ltd.),<br>16 February, 1999 (16.02.99),<br>Claims; Par. Nos. [0024] to [0027]<br>(Family: none) | 1-13<br>14-19 |
| Y<br>A | JP 2001-279029 A (Tokyo Printing Ink Mfg. Co.,<br>Ltd.),<br>10 October, 2001 (10.10.01),<br>Claims; Par. Nos. [0016] to [0027]<br>(Family: none) | 1,2,4,5<br>3,6-19 |
| Y<br>A | JP 2000-186152 A (Du Pont-Mitsui Polychemicals<br>Co., Ltd.),<br>04 July, 2000 (04.07.00),<br>Claims; Par. Nos. [0007] to [0016]<br>(Family: none) | 1,2,4,5<br>3,6-19 |
| Y<br>A | EP 906817 A1 (Suzuka Fuji Xerox Co., Ltd.),<br>07 April, 1999 (07.04.99),<br>Claims<br>& WO 97/38838 A1          & JP 2001-270951 A<br>& JP 2001-226639 A | 14-19<br>1-13 |
| Y<br>A | US 6046265 A (General Electric Co.),<br>04 April, 2000 (04.04.00),<br>Column 4, line 22 to column 5, line 61<br>& JP 11-255905 A | 1,2,4,5<br>3,6-14 |

Form PCT/ISA/210 (continuation of second sheet) (July 1998)